# DEMANDE DE BREVET EUROPEEN

(11) **EP 0 898 891 A1**
(43) Date de publication de la demande: **03.03.1999**
(21) Numéro de dépôt: 98402131.1
(22) Date de dépôt: 27.08.1998
(51) Int. Cl.: A21C 7/01

(54) **Façonneuse de pâtons**

(30) Priorité: 29.08.1997 FR 9710813
(71) Demandeur: Electrolux Baking, 06800 Cagnes-sur-Mer (FR)
(72) Inventeur: Bonnett, Daniel, 58700 Premery (FR); Garcia, François, 58130 Urzy (FR)
(74) Mandataire: Moncheny, Michel

(57) **Abrégé**

Cette façonneuse de pâtons comporte une station de laminage (20) de pâtons et une station de convoyage (14, 16) des pâtons laminés selon un trajet aller, de l'entrée de ladite station de convoyage (14, 16) située en regard de la station de laminage (20) jusqu'à un point intermédiaire, à travers une station de roulage des pâtons laminés, et un trajet retour, à travers une station de façonnage (44) des pâtons roulés par allongement de ces derniers, dudit point intermédiaire jusqu'à la sortie de la station de transfert située à proximité de ladite entrée. Elle comporte en outre, disposée au voisinage du point intermédiaire, une station (46) de transfert actif des pâtons roulés du trajet aller vers le trajet retour.

## Description

La présente invention concerne une façonneuse de pâtons.

Plus particulièrement, l'invention se rapporte à une façonneuse de pâtons du type horizontal comprenant, montées sur un châssis, une station de laminage de pâtons et une station de convoyage des pâtons laminés selon un trajet aller, de l'entrée de la station de convoyage située en regard de la station de laminage jusqu'à un point intermédiaire, à travers une station de roulage des pâtons laminés, et un trajet retour, à travers une station de façonnage des pâtons roulés par allongement de ces derniers, dudit point intermédiaire jusqu'à la sortie de la station de convoyage située à proximité de ladite entrée et au niveau de laquelle les pâtons façonnés sont délivrés en sortie de la façonneuse.

Dans l'état de la technique, la station de convoyage comporte un convoyeur motorisé à tapis de transfert, comprenant deux faces actives, à savoir une première face active assurant le trajet des pâtons laminés selon le premier trajet aller et une deuxième face active opposée à la première et délimitant le deuxième trajet.

Dans les façonneuses du type horizontal, dans lesquelles le convoyeur est disposé horizontalement, la deuxième face active du convoyeur, inférieure, coopère avec une plaque horizontale fixe s'étendant sensiblement parallèlement à cette dernière et à une distance appropriée pour provoquer l'allongement des pâtons.

En raison de leur structure, et en particulier de l'immobilité de la plaque horizontale, les façonneuses de ce type ne permettent pas l'obtention de pâtons de longueur relativement importante.

On connaît des façonneuses qui permettent de remédier partiellement à cet inconvénient.

Dans ces façonneuses, la station de convoyage comporte deux convoyeurs motorisés à tapis de transfert s'étendant parallèlement et entraînés en rotation en sens contraire l'un par rapport à l'autre.

La face supérieure du premier convoyeur assure le transfert des pâtons à travers la station de roulage jusqu'au point intermédiaire, tandis que sa face inférieure coopère avec la face supérieure du deuxième convoyeur, qui est animée d'un mouvement suivant un sens opposé et avec une vitesse inférieure de manière à assurer le façonnage des pâtons et leur acheminement jusqu'à la sortie de la façonneuse.

L'utilisation de deux surfaces actives animées de mouvements antagonistes permet un allongement considérable des pâtons façonnés. Toutefois, la face active du deuxième convoyeur tendant à déplacer les pâtons à l'opposé de la sortie de la façonneuse, il est nécessaire de positionner les convoyeurs selon une direction oblique de telle sorte que les pâtons arrivés au niveau du point intermédiaire tombent par gravité entre les premier et deuxième convoyeurs.

On conçoit que ceci présente un certain nombre d'inconvénients, notamment en raison du positionnement peu précis des pâtons au niveau de la station de façonnage dû au mode de transfert utilisé pour les diriger vers cette dernière, ce qui est susceptible d'engendrer des défauts dans le façonnage.

Le but de l'invention est de palier cet inconvénient et de fournir une façonneuse de pâtons capable de délivrer des pâtons de grande longueur et de forme régulière et centrés par rapport à la sortie de la façonneuse.

Elle a donc pour objet une façonneuse de pâtons du type précité, caractérisée en ce qu'elle comporte en outre, disposée au voisinage du point intermédiaire, une station de transfert à organe mobile assurant le transfert actif des pâtons roulés du trajet aller vers le trajet retour.

La façonneuse de pâtons selon l'invention peut en outre comporter une ou plusieurs des caractéristiques suivantes :
- la station de convoyage comporte un premier convoyeur motorisé à tapis de transfert, comportant des première et deuxième faces actives mutuellement opposées et mobiles en sens inverse, et un deuxième convoyeur motorisé comportant une face active parallèle à la deuxième face active du premier convoyeur et mobile à une vitesse inférieure et en sens inverse par rapport à cette dernière, ladite première face active du premier convoyeur délimitant ledit trajet aller, et ladite deuxième face active du premier convoyeur et ladite face active du deuxième convoyeur assurant conjointement le façonnage et le déplacement des pâtons roulés selon ledit trajet retour;
- la station de transfert comporte un troisième convoyeur motorisé à tapis, disposé en aval du trajet aller et comportant une surface active tournée vers le point intermédiaire et s'étendant en direction d'un intervalle situé entre lesdits premier et deuxième convoyeurs;
- au niveau du point intermédiaire, la surface active du troisième convoyeur et la surface en regard du premier convoyeur sont espacées l'une de l'autre d'une distance inférieure ou égale au diamètre des pâtons roulés et sont animées de mouvements antagonistes pour l'entraînement en rotation des pâtons et éviter leur éjection;
- le troisième convoyeur est monté déplaçable en translation sur le châssis parallèlement au deuxième convoyeur autour d'une position d'équilibre stable de réception de pâtons roulés, entre une position rétractée permettant le passage de ces derniers au-delà du point intermédiaire, sous l'action d'un effort exercé par lesdits pâtons s'exerçant à l'encontre de moyens de rappel sollicitant ledit troisième convoyeur en direction de la position d'équilibre, et une position avancée de poussée des pâtons entre lesdits premier et deuxième convoyeurs sous l'action de l'inertie dudit troisième convoyeur;
- le troisième convoyeur est équipé de galets s'engageant dans des guides sensiblement inclinés de manière à solliciter ledit troisième convoyeur en position rétractée;
- le tapis d'entraînement du troisième convoyeur est constitué par l'association d'une pluralité de courroies s'étendant parallèlement au sens de déplacement des pâtons;
- la vitesse d'entraînement du troisième convoyeur est au moins égale à celle du deuxième convoyeur, et inférieure à celle du premier convoyeur;
- lesdits premier et deuxième convoyeurs sont disposés horizontalement et ledit troisième convoyeur est incliné par rapport à ce dernier;
- lesdits deuxième et troisième convoyeurs sont fixés sur un même caisson mobile de façon réglable et porté par le châssis, et ledit premier convoyeur est monté sur un caisson fixe par rapport audit châssis, de sorte que l'écartement entre lesdits premier et deuxième convoyeurs est réglable.

D'autres caractéristiques et avantages ressortiront de la description suivante, donnée uniquement à titre d'exemple et faite en référence aux dessins annexés sur lesquels :
- la figure 1 représente une vue en perspective d'une façonneuse selon l'invention;
- la figure 2 représente une vue schématique suivant une coupe longitudinale de la façonneuse de la figure 1;
- la figure 3 représente une vue agrandie d'un détail de la façonneuse de la figure 2 montrant les moyens de fixation du troisième convoyeur; et
- les figures 4 à 6 montrent la façonneuse de la figure 2 au cours de différentes phases de son fonctionnement.

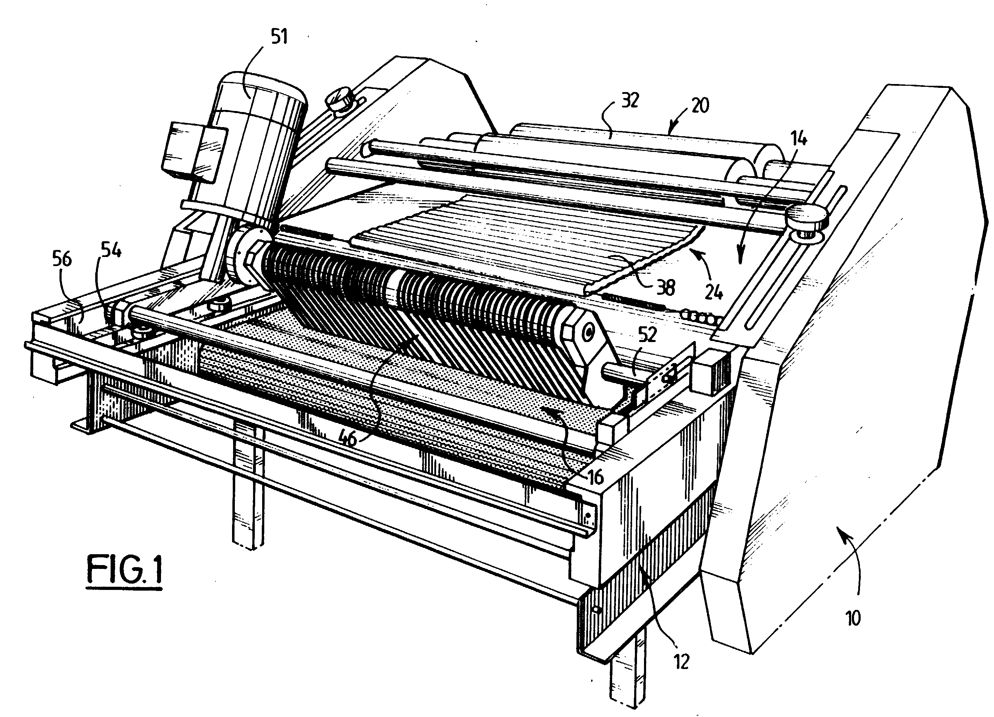

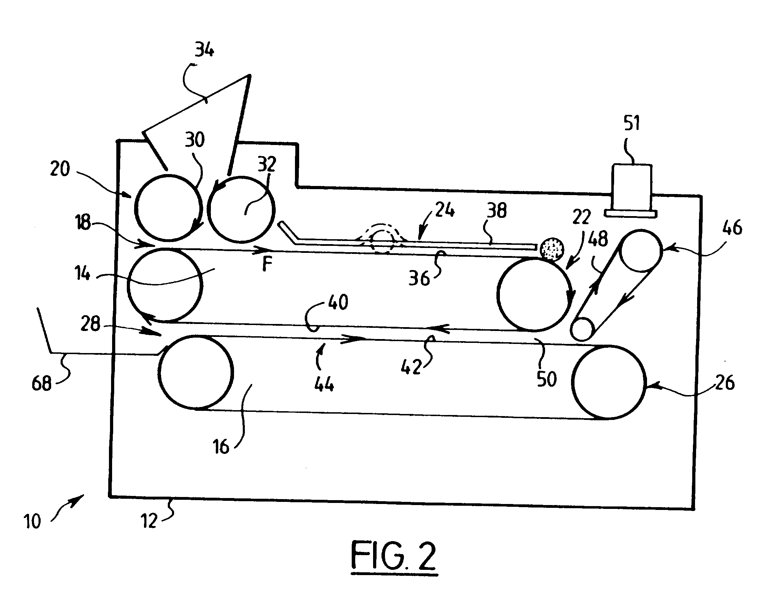

En référence aux figures 1 et 2, la façonneuse de pâtons suivant l'invention, désignée par la référence numérique générale 10, comporte un châssis 12 réalisé par exemple à partir de poutres et de profilés métalliques, et sur lequel sont montés, l'un au dessus de l'autre, deux convoyeurs motorisés à tapis transporteur de pâtons désignés, à savoir un premier convoyeur supérieur 14 et un deuxième convoyeur inférieur 16.

Les deux convoyeurs 14 et 16 constituent conjointement une station de convoyage de pâtons entre l'entrée de celle-ci, constituée par une première extrémité 18 du convoyeur supérieur 14 située en regard d'une station de laminage de pâtons 20, et un point intermédiaire, constituée par l'extrémité opposée 22 de ce convoyeur supérieur 14.

La station de convoyage achemine les pâtons de l'entrée vers le point intermédiaire selon un trajet aller, à travers une station de roulage 24 des pâtons laminés délivrés par la station de laminage 20, puis, après avoir été transférés sur une première extrémité 26 du convoyeur inférieur 16, selon un trajet retour du point intermédiaire jusqu'à la sortie de la station de convoyage, constituée par l'extrémité opposée 28 de ce convoyeur inférieur 16 et située à proximité de l'entrée de la station de transfert.

La station de laminage 20 est constituée par l'association de deux cylindres lamineurs, respectivement 30 et 32, situés en regard d'une trémie d'entrée 34 (non représentée sur la figure 1) permettant l'alimentation de la façonneuse en pâtons.

Le tapis des convoyeurs supérieur 14 et inférieur 16 circule dans le même sens représenté par une flèche F sur le figure 2, le tapis du convoyeur supérieur 14 étant animé d'un mouvement selon une vitesse supérieure à celle du tapis du convoyeur inférieur 16.

Le premier convoyeur 14 comporte une face active supérieure 36 délimitant le trajet aller et coopérant avec un tapis 38 fixe avec lequel elle forme la station de roulage de pâtons 24. Ce tapis 38 est par exemple constitué par une plaque souple réalisée en un matériau approprié pour l'utilisation envisagée, par exemple en fil d'inox alimentaire. Il assure, conjointement avec la face supérieure active 36, le roulage des pâtons laminés, comme cela est classique.

Par ailleurs, le convoyeur supérieur 14 comporte une face active inférieure, désignée par la référence numérique 40, s'étendant parallèlement à la face active supérieure 36 et mobile en sens inverse par rapport à cette dernière.

Elle coopère avec la face active supérieure 42 du convoyeur inférieur 16 pour délimiter le trajet retour et constituer une station 44 de façonnage des pâtons roulés par allongement de ces derniers.

En effet, la face active supérieure 42 de ce convoyeur inférieur 16 s'étend sensiblement parallèlement à la face inférieure active 40 du convoyeur supérieur 14 et est mobile en sens inverse par rapport à cette dernière.

En outre, ces deux faces actives 40 et 42 sont légèrement convergentes et sont distantes l'une de l'autre, au niveau du point intermédiaire 22 d'une distance correspondant sensiblement au diamètre des pâtons roulés délivrés en sortie de la station de roulage 24 et, au niveau de la sortie 28 de la station de transfert, d'une distance correspondant au diamètre de pâtons à obtenir.

Par ailleurs, et comme cela est visible sur les figures 1 et 2, la façonneuse comporte une station de transfert de pâtons roulés, désignée par la référence numérique 46, assurant le transfert des pâtons du trajet aller vers le trajet retour s'étendant entre la face active inférieure 40 et la face active supérieure 42 des convoyeurs supérieur 14 et inférieur 16, du point intermédiaire 22 jusqu'à la sortie 28 jusqu'à la station de convoyage.

La station de transfert 46 est constituée par un troisième convoyeur à tapis, disposé en aval du trajet aller et comportant une surface active 48 tournée vers le point intermédiaire 22 et s'étendant en direction d'un intervalle 50 situé entre les convoyeurs supérieur 14 et inférieur 16.

Le troisième convoyeur 46 est motorisé sous l'action de moyens moteurs 51 à une vitesse inférieure à celle du convoyeur supérieur 14, et supérieure ou égale à celle du convoyeur inférieur 16, de telle sorte que les surfaces en regard des premier et troisième convoyeurs soient animées de mouvements antagonistes, pour l'entraînement en rotation des pâtons roulés et le transfert de ces derniers jusqu'à l'intervalle 50.

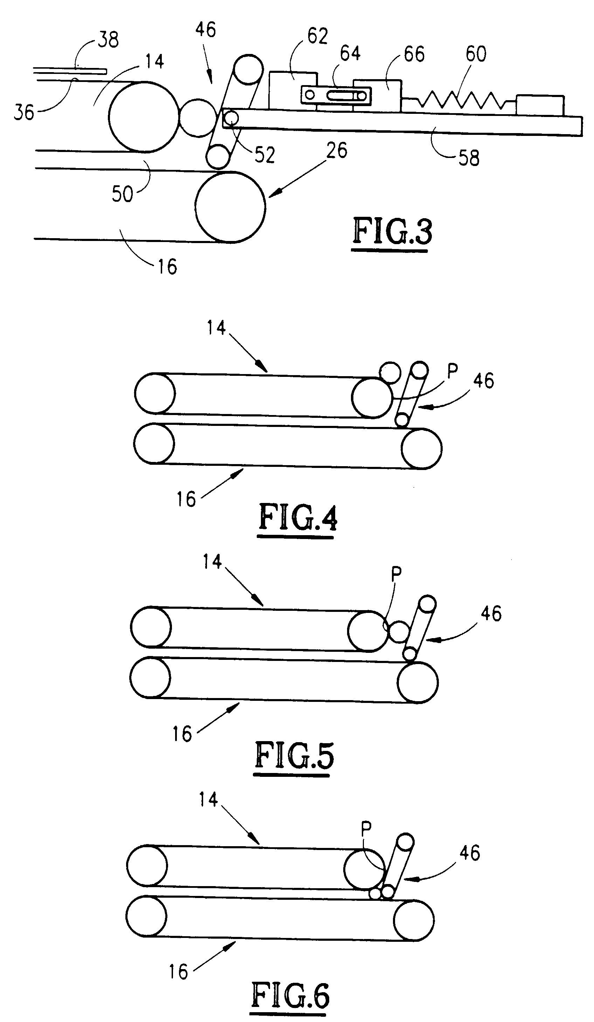

Suivant une caractéristique particulière de l'invention, le troisième convoyeur 46 est monté déplaçable en translation sur le châssis 12 autour d'une position d'équilibre stable de réception des pâtons roulés, représentée sur les figures 2 et 4, dans laquelle la plus faible distance entre les surfaces en regard des premier 14 et troisième 46 convoyeurs est inférieure au diamètre des pâtons roulés.

En particulier, le troisième convoyeur 46 est monté axialement déplaçable sur le châssis 12 entre une position rétractée, représentée sur la figure 5, permettant le passage des pâtons roulés au-delà du point intermédiaire 22 et une position avancée de poussée des pâtons entre les premier et deuxième convoyeurs, représentée sur la figure 6.

Pour ce faire, et comme représenté sur les figures 1 et 3, le troisième convoyeur 46 est muni d'un ou de plusieurs arbres transversaux 52 équipés, à leurs extrémités opposées, de galets, tel que 54, s'engageant dans une gorge 56 complémentaire de guidage de ce convoyeur 46.

Par ailleurs, et comme cela est visible sur la figure 3, l'arbre transversal 52 est relié, par exemple à l'aide d'un longeron 58 optionnel, à un ressort 60 relié à une pièce fixe 62 du châssis 12 par l'intermédiaire de deux pièces, respectivement 64 et 66 coulissantes l'une par rapport à l'autre.

Ainsi, et comme on le conçoit, le ressort 60 sollicite le troisième convoyeur 46 en position avancée.

Par ailleurs, les gorges 56 de guidage de ce convoyeur 46 sont légèrement inclinées de manière à former une pente douce pour le solliciter en position rétractée.

Dans la position d'équilibre, telle que représentée sur la figure 3, l'effort exercé par le ressort 60 s'oppose au déplacement par gravité du troisième convoyeur 46.

Selon une autre caractéristique du troisième convoyeur 46, celui-ci comporte un tapis constitué par l'association d'un ensemble de courroies s'étendant parallèlement au sens de déplacement des pâtons, c'est à dire perpendiculairement à leur dimension longitudinale.

Ces courroies forment dans les pâtons, au cours de leur transfert, des empreintes annulaires, provoquant ainsi un allongement sensible des pâtons.

Il serait toutefois possible de remplacer ces courroies par un tapis plein réalisé en un matériau souple approprié.

En se référant à nouveau à la figure 2, on voit que la façonneuse est complétée par un bac de récupération de pâtons façonnés, désigné par la référence numérique 68, monté sur le châssis 12, et par des moyens de motorisation (non représentés) des premier 14 et deuxième convoyeurs 16.

Il est à noter que le convoyeur supérieur 14 est fixé sur un caisson fixe par rapport au châssis 12 et que les deuxième 16 et troisième convoyeurs 46 sont fixés sur un même caisson mobile et réglable en hauteur (non représenté), lequel est porté par le châssis 12, de telle sorte que l'écartement entre les premier et deuxième convoyeurs soit réglable, en fonction du diamètre des pâtons à obtenir.

Il est en outre à noter que le troisième convoyeur 46 est monté sur le caisson mobile de façon réglable en inclinaison, en fonction de la masse de pâte à façonner.

Le fonctionnement de cette façonneuse va maintenant être décrit en référence aux figures 4 à 6.

Les pâtons, insérés successivement en entrée de la façonneuse par la trémie 34, passent à travers la station de laminage 20 et sont délivrés en sortie de celle-ci, en entrée de la station de convoyage, c'est à dire sur la face supérieure active 36 du premier convoyeur 14.

Les pâtons laminés sont ensuite entraînés sous l'action de cette dernière à travers la station de roulage 24 à la sortie de laquelle ils se présentent sous la forme d'un cylindre, comme représenté sur la figure 4.

Il est à noter que dans cette position, le troisième convoyeur 46 de la façonneuse se situe dans sa position d'équilibre stable.

Les pâtons roulés sont ensuite successivement transférés, au niveau du point intermédiaire 22, du trajet aller vers le trajet retour sous l'action du troisième convoyeur 46.

Ainsi, lorsque chaque pâton atteint la surface active 48 du troisième convoyeur 46, celui-ci, sous l'action du pâton, se déplace de sa position d'équilibre vers sa position rétractée, à l'encontre du ressort 60, pour permettre le passage du pâton au-delà du point intermédiaire P, sous l'action de la différence de vitesse de rotation entre les premier et troisième convoyeurs (figure 5).

Ensuite, le troisième convoyeur est ramené dans sa position initiale sous l'action du ressort 60 et pousse le pâton entre les premier et deuxième convoyeurs, sous l'action de son inertie et au moyen du coulissement des pièces 64 et 66 (figure 3).

La façonneuse se situe alors dans la position représentée sur la figure 6.

Le pâton est ensuite entraîné, sous l'action du premier convoyeur 14 coopérant avec le deuxième convoyeur 16 à travers la station de façonnage au niveau de laquelle il subit un allongement sous l'action des faces actives 40 et 42 et un déplacement jusqu'au bac de récupération 68.

On conçoit que les pâtons étant en permanence guidés et entraînés en rotation au cours de leur transfert de l'entrée de la station de convoyage jusqu'à la sortie de celle-ci, le façonnage s'effectue de façon régulière et homogène. On obtient ainsi un produit de bonne qualité.

En outre, les déplacements antagonistes des premier et deuxième convoyeurs et l'action du troisième convoyeur sur les pâtons permettent l'obtention de produits de grande longueur.

## Revendications

1. Façonneuse de pâtons comprenant, montées sur un châssis (12), une station (20) de laminage de pâtons et une station (14, 16) de convoyage des pâtons laminés selon un trajet aller, de l'entrée (18) de ladite station de convoyage (14, 16) située en regard de la station de laminage (20) jusqu'à un point intermédiaire (P), à travers une station (24) de roulage des pâtons laminés, et un trajet retour, à travers une station (44) de façonnage des pâtons roulés par allongement de ces derniers, dudit point intermédiaire (P) jusqu'à la sortie (28) de la station de convoyage située à proximité de ladite entrée (18) et au niveau de laquelle les pâtons façonnés sont délivrés en sortie de la façonneuse, caractérisée en ce qu'elle comporte en outre, disposée au voisinage du point intermédiaire, une station (46) de transfert à organe mobile assurant le transfert actif des pâtons roulés du trajet aller vers le trajet retour.

2. Façonneuse selon la revendication 1, caractérisée en que la station de convoyage comporte un premier convoyeur (14) motorisé à tapis de transfert, comportant des première et deuxième faces actives (36, 40) mutuellement opposées et mobiles en sens inverse, et un deuxième convoyeur (16) motorisé comportant une face active (42) parallèle à la deuxième face active (40) du premier convoyeur (14) et mobile à une vitesse inférieure et en sens inverse par rapport à cette dernière, ladite première face active (36) du premier convoyeur (14) délimitant ledit trajet aller, et ladite deuxième face active (40) du premier convoyeur (14) et ladite face active du deuxième convoyeur assurant conjointement le façonnage et le déplacement des pâtons roulés selon ledit trajet retour.

3. Façonneuse selon la revendication 2, caractérisée en ce que la station de transfert comporte un troisième convoyeur (46) motorisé à tapis, disposé en aval du trajet aller et comportant une surface active (48) tournée vers le point intermédiaire (P) et s'étendant en direction d'un intervalle (50) situé entre lesdits premier et deuxième convoyeurs.

4. Façonneuse selon la revendication 3, caractérisée en ce qu'au niveau du point intermédiaire (P), la surface active (48) du troisième convoyeur (46) et la surface en regard du premier convoyeur (14) sont espacées l'une de l'autre d'une distance inférieure ou égale au diamètre des pâtons roulés et sont animées de mouvements antagonistes pour l'entraînement en rotation des pâtons.

5. Façonneuse selon l'une des revendications 3 et 4, caractérisée en ce que le troisième convoyeur (46) est monté déplaçable en translation sur le châssis (12) parallèlement au deuxième convoyeur (16) autour d'une position d'équilibre stable de réception des pâtons roulés, entre une position rétractée permettant le passage de ces derniers au-delà du point intermédiaire (P), sous l'action d'un effort exercé par lesdits pâtons s'exerçant à l'encontre de moyens de rappel (60) sollicitant ledit troisième convoyeur en direction de la position d'équilibre, et une position avancée de poussée des pâtons entre lesdits premier et deuxième convoyeurs (14, 16) sous l'action de l'inertie dudit troisième convoyeur (46).

6. Façonneuse selon la revendication 5, caractérisée en ce que le troisième convoyeur (46) est équipé de galets (54) s'engageant dans des guides (56) sensiblement inclinés de manière à solliciter ledit troisième convoyeur (46) en position rétractée.

7. Façonneuse selon l'une quelconque des revendications 3 à 6, caractérisée en ce que le tapis d'entraînement du troisième convoyeur (46) est constitué par l'association d'une pluralité de courroies s'étendant parallèlement au sens de déplacement des pâtons.

8. Façonneuse selon l'une quelconque des revendications 3 à 7, caractérisée en ce que la vitesse d'entraînement du troisième convoyeur (46) est au moins égale à celle du deuxième convoyeur (16), et inférieure à celle du premier convoyeur (14).

9. Façonneuse selon - l'une quelconque des revendications 3 à 8, caractérisée en ce que lesdits premier et deuxième convoyeurs (14, 16) sont disposés horizontalement et ledit troisième convoyeur (46) est incliné par rapport à ces derniers.

10. Façonneuse selon l'une quelconque des revendications 3 à 9, caractérisée en ce que lesdits deuxième et troisième convoyeurs (16, 46) sont fixés sur un même caisson mobile de façon réglable et porté par le châssis (12), et ledit premier convoyeur (14) est monté sur un caisson fixe par rapport audit châssis (12), de sorte que l'écartement entre lesdits premier et deuxième convoyeurs est réglable.
